# EUROPÄISCHE PATENTSCHRIFT

(11) **EP 2 911 826 B1**
(45) Veröffentlichungstag und Bekanntmachung des Hinweises auf die Patenterteilung: **05.04.2017**
(21) Anmeldenummer: 13783332.3
(22) Anmeldetag: 25.10.2013
(51) Int. Cl.: B23P 11/00, B21D 53/84, F01L 1/047, F16D 1/072, F16H 53/02, F01L 1/053

(54) **VERFAHREN ZUM ZUSAMMENBAU EINES MOTORMODULS**
METHOD FOR ASSEMBLING AN ENGINE MODULE
PROCÉDÉ D'ASSEMBLAGE D'UN MODULE DE MOTEUR

(30) Priorität: 29.10.2012 DE 102012021180; 10.07.2013 DE 102013107284
(43) Veröffentlichungstag der Anmeldung: 02.09.2015
(73) Patentinhaber: Thyssenkrupp Presta Teccenter Ag, 9492 Eschen (LI)
(72) Erfinder: WIESNER, Peter, CH-9493 Mauren (LI)
(74) Vertreter: ThyssenKrupp Intellectual Property GmbH
(86) Internationale Anmeldenummer: PCT/EP2013/072357
(87) Internationale Veröffentlichungsnummer: WO 2014/067860

(56) Entgegenhaltungen:
- EP-A2- 1 155 770
- WO-A1-2012/031770
- JP-A- 2008 163 833

## Beschreibung

Die Erfindung betrifft ein Verfahren zum Zusammenbau eines Moduls für einen Kraftfahrzeugmotor, welches mindestens eine Stützstruktur mit Lageraufnahmen und mindestens eine in den Lageraufnahmen drehbar gelagerte Nockenwelle umfasst, wobei die Nockenwelle im Zuge des Zusammenbaus des Moduls aus einer Tragwelle und mit der Tragwelle zu verbindenden Bauteilen gebaut wird, und wobei die Bauteile Durchgangsöffnungen zur Aufnahme der Tragwelle aufweisen, wobei folgende Verfahrensschritte umfasst sind: - Bereitstellen der Stützstruktur mit den Lageraufnahmen, - Positionieren der auf der Tragwelle zu befestigenden Bauteile in einer vorbestimmten Reihenfolge derart, dass die Bauteile mit ihren Durchgangsöffnungen fluchtend zu den Lageraufnahmen der Stützstruktur angeordnet sind, und - Durchschieben der Tragwelle durch die Lageraufnahmen der Stützstruktur und die Durchgangsöffnungen der Bauteile.

Ein solches Verfahren ist aus der WO 2012/031770 A1 bekannt. Um den Montageaufwand beim Zusammenbau eines Kfz-Motors zu verringern und Logistik- und Lagerungskosten bei der Motormontage zu reduzieren, werden den Automobilherstellern von den Zulieferern bereits fertig zusammengebaute Module an das Montageband geliefert. Solche Module bestehen beispielsweise aus einer Zylinderkopfhaube und einer darin gelagerten Nockenwelle. Beim Zusammenbau des Motors kann dieses Modul einfacher als die einzelnen Bestandteile gehandhabt und am Zylinderkopf des Motors montiert werden.

Aus der EP 1155770 B1 ist ein Montageverfahren für ein Modul bekannt, welches eine Zylinderkopfhaube und eine darin gelagerte Nockenwelle umfasst. Bei dem beschriebenen Montageverfahren ist eine Zylinderkopfhaube mit Durchführungen vorgesehen, die von der Welle, der späteren Nockenwelle, durchdrungen werden. Die auf der Welle zu befestigenden Bauteile, wie beispielsweise Nocken, müssen in speziellen Aufnahmen derart angeordnet werden, dass sie sich genau in der erforderlichen Winkelausrichtung und der erforderlichen axialen Position, entsprechend ihrer Anordnung auf der fertig gebauten Nockenwelle, befinden. Nachdem die Bauteile und die Zylinderkopfhaube zueinander ausgerichtet sind, wird die Tragwelle durch die Durchführungen geschoben. Die Nocken werden mittels Pressverbindung auf der Welle befestigt. Um diese Pressverbindung herzustellen, sind in der EP 1155770 B1 verschiedene Möglichkeiten angegeben. Gemäß einer dieser Möglichkeiten wird die Pressverbindung dadurch hergestellt, dass die Welle unter Kraftaufwand in die Nocken eingepresst wird.

Nachteilig bei diesem Verfahren ist, dass die Nocken über die gesamte Welle geschoben werden und dabei die Oberfläche der Welle mit Kratzern bzw. Riefen beschädigen. Solche Beschädigungen sind gerade im Bereich der Lagerstellen sehr unvorteilhaft.

Eine andere in der EP 1155770 B1 offenbarte Möglichkeit die Pressverbindung herzustellen besteht darin, dass die Welle im Bereich der Bauteile mittels Innenhochdruckumformverfahren aufgeweitet und die Bauteile dabei mittels Querpressverband befestigt werden. Ein Nachteil dieses Befestigungsverfahrens besteht darin, dass keine Informationen über den hergestellten Pressverband und damit über die Befestigung der Nocken auf der Welle vorliegen, mit denen die Qualität der Verbindung zwischen Nocken und Welle beurteilt werden kann. Eine prozesssichere Serienfertigung ist daher nur schwer möglich. Ein unzureichender Pressverband bzw. eine beschädigte Nocke bleiben somit zunächst unbemerkt.

Darüber hinaus ist das aus der EP 1155770 B1 bekannte Verfahren aufwändig und mit hohen Kosten verbunden, da die auf der Welle zu befestigenden Bauteile bereits vor dem Einschieben der Welle genau so positioniert und ausgerichtet werden müssen, wie sie auf der späteren Nockenwelle angeordnet sein sollen. Um dies zu erreichen sind spezielle Halteelemente erforderlich, in die die Bauteile winkel- und lagergerecht eingelegt und darin gehalten werden können. Die Herstellung dieser Halteelemente ist aufwändig und teuer. Außerdem sind für unterschiedliche Nockenwellen unterschiedliche Halteelemente erforderlich, denn die Winkelausrichtung der Nocken ist beispielsweise von dem Motor (z.B. 2-Zylinder oder 4-Zylinder) abhängig, wodurch dieses Verfahren sehr unflexibel ist.

Der Erfindung liegt die Aufgabe zu Grunde, ein Verfahren zum Zusammenbau eines eine Stützstruktur und eine Nockenwelle umfassenden Moduls anzugeben, bei dem keine speziell ausgebildeten Vorrichtungen zum Halten und Anordnen der auf der Tragwelle zu befestigenden Bauteile in der jeweils korrekten Winkelposition erforderlich sind, und das flexibel für unterschiedliche Nockenwellen für unterschiedliche Motoreneinsetzbar ist.

Die Aufgabe wird gelöst durch ein Verfahren mit den Merkmalen nach Anspruch 1. Vorteilhafte Weiterbildungen des erfindungsgemäßen Verfahrens sind in den Unteransprüchen angegeben.

Ein Vorteil des erfindungsgemäßen Verfahrens besteht darin, dass die auf der Tragwelle zu befestigenden Bauteile wie beispielsweise Nocken, Sensorräder usw. vor einem Einschieben der Tragwelle lediglich vorpositioniert werden. D.h. sie werden an solchen Axialpositionen der Tragwelle angeordnet, die nicht den Axialpositionen entsprechen, die diese Bauteile auf der fertig gebauten Nockenwelle einnehmen. Daher brauchen die Bauteile hinsichtlich ihrer Winkellage relativ zur Tragwelle noch nicht genau ausgerichtet zu sein. Bei dem erfindungsgemäßen Verfahren kann somit auf eine genaue Ausrichtung der Bauteile vor dem Einschieben der Tragwelle vollständig verzichtet werden, weshalb die Anforderungen an die Haltevorrichtungen der Bauteile deutlich geringer sind.

Bei dem erfindungsgemäßen Verfahren wird, nach dem Einschieben der Tragwelle in die Lageraufnahmen der Stützstruktur und die Durchgangsöffnungen der Bauteile, der Durchmesser der Tragwelle durch Aufweiten vergrößert. Der durch die Aufweitung entstandene Durchmesser der Tragwelle, und der Durchmesser der Durchgangsöffnungen der Bauteile definieren die Überdeckung zwischen der Tragwelle und den Bauteilen und bestimmen damit das durch die Bauteile nach dem Aufschieben auf die jeweilige Fügeposition übertragbare Drehmoment. Zum Zeitpunkt der Durchmesseraufweitung der Tragwelle sind die Bauteile noch vorpositioniert und nicht an ihrer vorgesehenen Fügeposition.

Für die Ausbildung der Durchmesseraufweitung wird die zumindest teilweise als Hohlwelle ausgebildete Tragwelle einer Innendruckumformung unterzogen, wobei die Tragwelle zumindest teilweise an den Fügepositionen elastisch und plastisch verformt und so die Durchmesseraufweitung erzeugt wird. Die Innendruckumformung erfolgt beispielsweise mittels eines in den Hohlraum der Tragwelle eingeleiteten und unter Druck gesetzten Fluids. Die Durchmesservergrößerung kann jedoch auch mittels Aufspreizen eines Druckelementes, wie beispielsweise eines Dorns oder dgl., in der Tragwelle realisiert werden. Das Aufspreizen des Dornes kann mechanisch oder hydraulisch erfolgen. Die Durchmesseraufweitungen der Tragwelle können nacheinander oder zeitgleich ausgebildet werden. Im Stand der Technik sind bereits eine Vielzahl von Vorrichtungen und Verfahren zum Innendruckumformen beschrieben (beispielsweise DE 10134840 A1, DE 19821807 C2), so dass hier auf eine weitere Erläuterung der möglichen Vorrichtungen und Verfahren verzichtet wird.

Der Vorteil, die Durchmesservergrößerung mittels Innendruckumformung zu Erzeugen, liegt in dem geringen Platzbedarf radial um die Tragwelle herum. Lediglich der Zugang zu dem entsprechenden Hohlraum in der Tragwelle ist erforderlich. In der Regel ist der Hohlraum zur Stirnseite der Nockenwelle hin offen und das Fluid oder das Druckmittel kann so einfach in den Hohlraum eingebracht werden. Bei einer Innendruckumformung mittels eines aufspreizbaren Dorns oder dgl., kann zudem auf ein Abdichten gegen das Austreten von Fluid verzichtet werden, was die Kosten weiter senkt. Es kann von Vorteil sein, die Tragwelle beim Innendruckumformen zumindest im Bereich der Durchmesservergrößerung radial zu stützen bzw. zu führen. Die Ausbildung der Durchmesservergrößerung kann so besser kontrolliert und die Konzentrizität der Durchmesservergrößerung zur Tragwelle und zu den Lageraufnahmen sichergestellt werden.

Bei dem erfindungsgemäßen Verfahren können die Bauteile axial entlang der Tragwelle verschoben und auf die ihnen jeweils zugeordnete Durchmesservergrößerung der Tragwelle aufgepresst werden. Es ist jedoch auch möglich, die Tragwelle axial zu verschieben und die den jeweiligen Bauteilen zugewiesenen Durchmesservergrößerungen in die Durchgangsöffnungen der Bauteile einzupressen.

Die jeweilige Winkellage jedes einzelnen Bauteils relativ zur Tragwelle kann auf einfache Weise dadurch eingestellt werden, dass die Tragwelle relativ zu dem jeweiligen Bauteil um einen bestimmten Winkel verdreht wird, so dass die erforderliche relative Winkellage des Bauteils zu der Tragwelle erreicht wird. Daher können mit dem erfindungsgemäßen Verfahren unterschiedliche Module mit ganz unterschiedlichen Nockenwellen für unterschiedliche Motoren gebaut werden, ohne dass für jede unterschiedliche Nockenwelle jeweils eine spezielle Haltevorrichtung erforderlich ist, um die Positionierung und Ausrichtung der Nocken auf der Tragwelle sicherzustellen. Somit lassen sich mit dem erfindungsgemäßen Verfahren und mit ein- und derselben Montagevorrichtung auf kostengünstige und einfache Weise für unterschiedliche Motoren oder Motorvarianten Module mit unterschiedlichen Nockenwellen fertigen, bei denen die auf der Nockenwelle zu befestigenden Bauteile in unterschiedlichen Winkellagen relativ zu der Tragwelle angeordnet sind.

Die Stützstruktur ist beispielsweise ein Lagerbock, ein Lagerrahmen oder eine Zylinderkopfhaube mit Lageraufnahmen für eine oder mehrere Nockenwellen. Die Verbindung der Lagerböcke untereinander kann kraft-, form- und/oder stoffschlüssig erfolgen. An welcher Stelle die Lageraufnahmen miteinander verbunden sind, wird üblicherweise in Abhängigkeit vom Zylinderkopf und/oder den im Zylinderkopf angeordneten Bauteilen festgelegt. Die Lageraufnahmen der Stützstruktur und der Durchmesser der Tragwelle können so bemessen sein, dass die Lageraufnahmen der Stützstruktur im fertig montierten Zustand des Moduls zusammen mit der Nockenwelle ein Gleitlager bilden. Die Tragwelle kann dafür derart ausgebildet sein, dass sie den für die Ausbildung eines Gleitlagers erforderlichen Durchmesser bereits vor oder erst nach einer spanenden Bearbeitung, wie beispielsweise Schleifen oder Drehen, aufweist. Insbesondere Schleif- und/oder Drehverfahren sind zu Erhöhung der Oberflächenqualität bzw. zur Reduzierung der Rauheit im Bereich der für die Gleitlagerung vorgesehenen Tragwellenbereiche von Vorteil.

Bei einer Ausgestaltung des erfindungsgemäßen Verfahrens wird vor dem Durchschieben der Tragwelle durch die Lageraufnahmen der Stützstruktur und die Durchgangsöffnungen der Bauteile auf der Mantelfläche der Tragwelle wenigstens eine Struktur ausgebildet, die zumindest teilweise auf der Fügeposition der Bauteile angeordnet ist. Vorteilhaft an dieser Variante des erfindungsgemäßen Verfahrens ist, dass sich die Struktur zumindest teilweise im Bereich auf der Durchmesseraufweitung befindet und die Struktur für die Ausbildung der Überdeckung zwischen Tragwelle und der Durchführöffnung der Bauteile genutzt werden kann. Dadurch kann die Fixierung der Bauteile einfach und individuell beeinflusst und angepasst werden. So kann beispielsweise die Überdeckung zwischen dem Bauteil und der Tragwelle individuell auf das Bauteil abgestimmt und eine unzulässige Dehnung des Bauteils und somit dessen Beschädigung beim Befestigen auf der Tragwelle vermieden werden.

Bei einer weiteren bevorzugten Ausführung des erfindungsgemäßen Verfahrens wird die Struktur mittels plastischer Umformung des Mantels der Tragwelle erzeugt. Plastische Umformverfahren sind beispielsweise materialverdrängende Verfahren, wie beispielsweise Rollieren, Rändeln, Kneten oder Stauchen.

Gemäß einer weiteren Ausgestaltung des erfindungsgemäßen Verfahrens kann die auf der der Mantelfläche der Tragwelle ausgebildete Struktur mittels eines materialabtrennenden Verfahrens mit geometrisch bestimmter oder geometrisch unbestimmter Schneide erzeugt werden. Materialabtrennende Verfahren mit geometrisch bestimmter Schneide sind beispielsweise das Drehen oder Fräsen. Typische Verfahren für materialabtrennende Verfahren mit geometrisch unbestimmter Schneide sind beispielsweise Schleifen und Honen.

Bei einem weiteren Ausführungsbeispiel wird die Struktur beispielsweise durch thermisches oder chemisches Abtragen, wie beispielsweise Laser- oder Elektronenstrahlbearbeitung, Erosion oder Ätzen, ausgebildet.

Vorteilhafterweise sind in den Durchführöffnungen der Bauteile Zähne ausgebildet, die sich beim Aufschieben der Bauteile auf die Durchmesservergrößerung in die Struktur eingraben können. Auf diese Weise wird zusätzlich zu dem Kraftschluss auch ein Formschluss zwischen der Tragwelle und den Bauteilen ausgebildet.

Um die Struktur zu erzeugen, werden bei einer Weiterbildung des erfindungsgemäßen Verfahrens verschiedene Verfahren in Kombination miteinander angewandt. So kann beispielsweise die Rollierung in einem nachfolgenden Verfahrensschritt überschliffen und so der Durchmesser des rollierten Bereiches auf ein vorbestimmtes Maß gebracht werden.

Bei den vorgenannten Ausgestaltungen des Verfahrens, können vor und/oder bei dem Durchschieben der Tragwelle durch die Öffnungen der Stützstruktur oder der Bauteile wenigstens einige der Bauteile und/oder die Stützstruktur erwärmt werden, wodurch der Durchmesser der Durchgangsöffnungen bzw. der Durchmesser der Lageraufnahmen vergrößert und das Durchschieben der Tragwelle und somit die Montage erheblich vereinfacht wird.

Vorteilhaft an dem beschriebenen Verfahren ist weiter, dass das Aufpressen der Bauteile auf die Durchmesseraufweitung bzw. die Struktur mit einem Kraftaufnehmer überwacht und in einem Kraft-Weg-Diagramm dokumentiert werden kann. So kann jeder Pressverbindung beim Zusammenbau des Moduls überwacht und die Qualität der Verbindungen zwischen den Bauteilen und der Tragwelle dokumentiert werden. Auf diese Weise kann eine serientaugliche Fertigungsqualität sichergestellt werden. Über das Kraft-Weg-Diagramm können Verbindungen mit nicht ausreichender Festigkeit bzw. Verbindungsqualität erkannt werden. Nockenwellen mit derartigen Fehlern können aussortiert werden, so dass sie nicht ausgeliefert werden.

Im Folgenden wird die Erfindung anhand von schematischen Zeichnungen im Prinzip näher erläutert. Im Einzelnen zeigt:
- Fig. 1: ein Modul,
- Fig. 2: ein auf der Tragwelle zu befestigendes Bauteil,
- Fig. 3a: eine schematische Darstellung eines Verfahrensschrittes, bei dem die Tragwelle durch die Lageraufnahmen der Stützstruktur und die Durchgangsöffnungen der auf der Tragwelle zu befestigenden Bauteile hindurch geschoben wird,
- Fig. 3b: eine schematische Darstellung der das Modul bildenden Bauteile, nach dem Durchschieben der Tragwelle,
- Fig. 3c: die Tragwelle mit einer Durchmesseraufweitung und dem dieser zugeordneten Bauteil,
- Fig. 3d: eine schematische Darstellung des gefügten Bauteils,
- Fig. 3e: eine schematische Darstellung von zwei auf der Tragwelle 4 fixierten Bauteilen,
- Fig. 4: eine schematische Darstellung einer erfindungsgemäßen Weiterbildung des Fügeprozesses,
- Fig. 5a: eine schematische Darstellung einer Tragwelle und
- Fig. 5b: eine schematische Darstellung einer Tragwelle vor dem erfindungsgemäßen Fügeprozess.

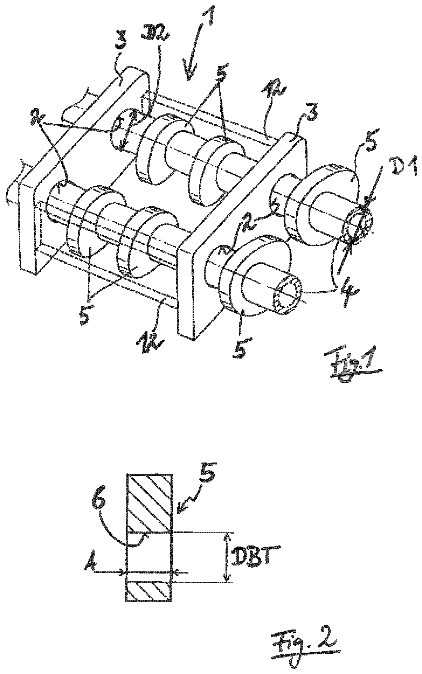

In Fig. 1 ist ein Modul 1 für einen Kraftfahrzeugmotor, umfassend eine Stützstruktur 3 mit Lageraufnahmen 2 und drehbar in den Lageraufnahmen 2 gelagerten und gebauten Nockenwellen, gezeigt. Die gebauten Nockenwellen umfassen eine als Hohlwelle ausgebildete Tragwelle 4 mit darauf befestigten Bauteilen 5. Die Stützstruktur 3 ist beispielsweise ein Lagerbock zur Lagerung einer oder mehrerer Nockenwellen. Sind mehrere Lagerböcke vorhanden, können diese beispielsweise miteinander verbunden sein, wie in Fig. 1 mit einem gestrichelt dargestellten Verbindungselement 12 gezeigt. Das Verbindungselement 12 kann einstückig mit den Lagerböcken oder als separates Bauteil ausgebildet sein. Ist das Verbindungselement 12 ein separates Bauteil, kann es mit den Lagerböcken form-, kraft- und/oder stoffschlüssig verbunden werden. Es entsteht dann ein Lagerrahmen. Eine mögliche Ausgestaltung des Lagerrahmens ist eine Zylinderkopfhaube, d.h. Lagerrahmen und Zylinderkopfhaube bilden eine Baueinheit. Die Stützstruktur 3 bzw. der Lagerrahmen ist auf einem Zylinderkopf eines Kfz-Motors befestigbar (nicht gezeigt).

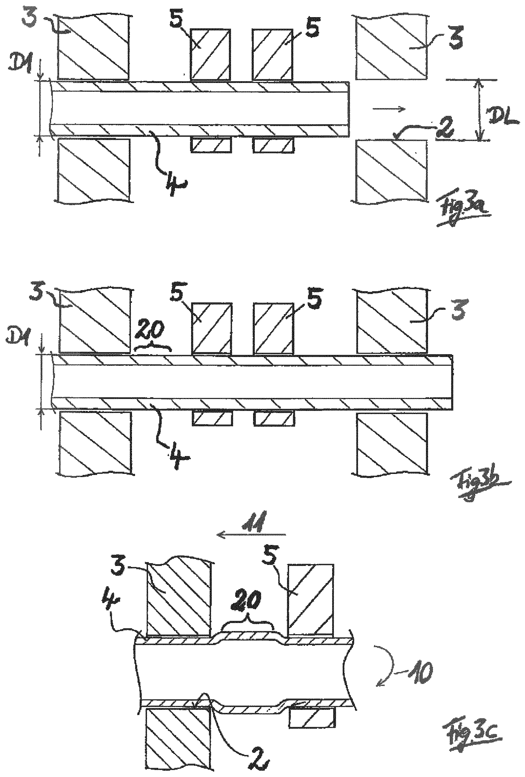

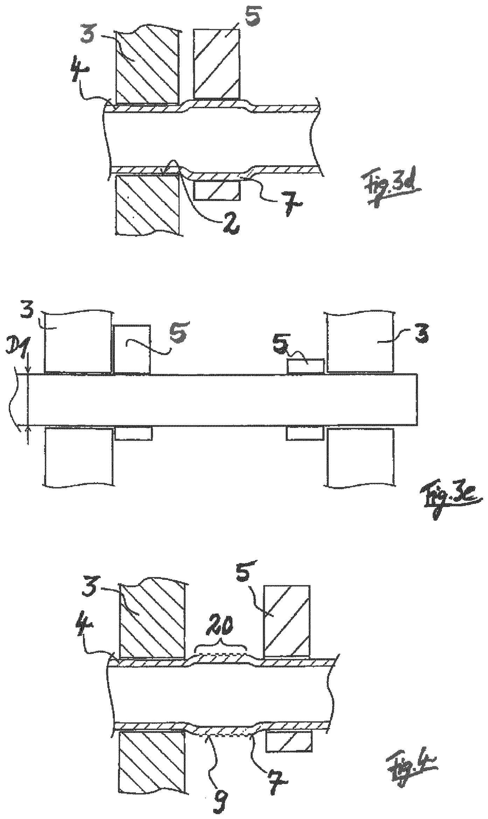

Die Tragwelle 4 weist einen Durchmesser D1 auf und bildet im zusammengebauten Zustand des Moduls mit den Lageraufnahmen 2 der Stützstruktur 3 ein Gleitlager. Die Lageraufnahmen 2 weisen einen Durchmesser DL auf. Um für das Gleitlager die Oberflächenqualität der Tragwelle 4 zu erhöhen bzw. einen vorbestimmten Durchmesser D1 der Tragwelle 4 zu erhalten, kann die Tragwelle 4, vorzugsweise ausgehend von einem größeren Durchmesser, bearbeitet werden. Bevorzugte Bearbeitungsverfahren sind z.B. Schleifen, Hohnen oder Drehen. Die Bauteile 5, die auf der Tragwelle befestigt werden, sind beispielsweise Nocken, Sensorräder und dgl.. In den Figuren wird beispielhaft das Befestigen von Nocken gezeigt, wobei das Befestigen anderer Bauteile auf die gleiche Weise erfolgen kann. Das Bauteil 5 weist eine Durchgangsöffnung 6 mit dem Durchmesser DBT und im Bereich der Durchgangsöffnung 6 eine Breite A auf, wie in Fig. 2 gezeigt. Die Durchgangsöffnung 6 des Bauteils ist gleich oder ist größer als der Durchmesser D1 der Tragwelle 4, so dass das Bauteil 5 auf die Tragwelle 4 aufgefädelt bzw. über diese geschoben werden kann, vgl. Fig. 3. Damit die Tragwelle 4 mit den Lageraufnahmen 2 ein Gleitlager ausbilden kann, müssen der Durchmesser der Tragwelle 4 und der Durchmesser der Lageraufnahme 2 aufeinander abgestimmt sein.

Bei dem erfindungsgemäßen Verfahren werden die Stützstruktur 3 und die Bauteile 5 derart positioniert, dass die Bauteile 5 zwischen den Lageraufnahmen 2 in einer vorbestimmten Reihenfolge angeordnet sind und die Durchgangsöffnungen 6 der Bauteile untereinander und mit den Lageraufnahmen 2 der Stützstruktur 3 fluchten. Die Winkelausrichtung der Bauteile 5 untereinander bzw. ihre jeweilige Winkelausrichtung relativ zu der Tragwelle 4 muss hier noch nicht beachtet werden. Vorzugsweise sind die Bauteile derart ausgerichtet, dass sie durch ihr Gewicht in der Haltevorrichtung sicher aufgenommen sind. Die Reihenfolge, in der die Bauteile 5 untereinander angeordnet sind, entspricht der Reihenfolge der Bauteile 5 auf der fertigen Nockenwelle. Die axiale Position der Bauteile 5 entspricht nicht den axialen Positionen bzw. den Fügepositionen 20, die die Bauteile 5 auf der fertig gebauten Nockenwelle einnehmen. Die Nocken sind somit in einer bestimmten axialen Position vorpositioniert. Die Tragwelle 4 wird mit den Lageröffnungen 2 der Stützstruktur 3 und den Durchgangsöffnungen 6 der Bauteile 5 fluchtend ausgerichtet und hindurch geschoben (vgl. Fig. 3a).

Beim Durchschieben der Tragwelle 4 durch die Lageraufnahmen 2 der Stützstruktur 3 und die Durchgangsöffnungen 6 der Bauteile 5 kann die Tragwelle 4 durch eine an der Stirnseite angreifenden Lanze geführt werden (nicht gezeigt). Um das Durchschieben der Tragwelle 4 zu erleichtern, kann die Tragwelle 4 abgekühlt und/oder die Stützstruktur 3 und/oder wenigstens einige der Bauteile 5 erwärmt werden. Durch die Abkühlung der Tragwelle 4 verringert sich ihr Durchmesser, wogegen die Erwärmung der Bauteile 5 bzw. der Stützstruktur 3 den Durchmesser DBT der Durchgangsöffnung 6 bzw. den Durchmesser DL der Lageröffnungen 2 vergrößert. Nach dem Durchschieben der Tragwelle 4 erfolgt ein Temperaturausgleich. Die Bauteile 5 sind nun auf der Tragwelle 4 vorpositioniert, aber noch nicht in ihrer Fügeposition 20 fixiert, (Fig. 3b).

In Fig. 3c ist das Ergebnis des nachfolgenden Verfahrensschrittes der Durchmesseraufweitung im Bereich der Fügeposition 20 gezeigt. Wie in Fig. 3c dargestellt ist, wurde der Durchmesser D1 der Tragwelle 4 zumindest teilweise in der axialen Fügeposition 20 der Tragwelle 4 vergrößert, in der ein Bauteil 5 fixiert werden soll. Wie groß die Durchmesservergrößerung 7 sein muss, wird auch durch das vom fertig montierten Bauteil 5 zu übertragenden Drehmoment bestimmt, denn das durch die Bauteile 5 übertragbare Drehmoment ist auch abhängig von der Überdeckung zwischen Durchmesservergrößerung 7 und Durchgangsöffnung 6 des Bauteils 5.

Bevor das Bauteil 5 auf die Durchmesservergrößerung 7 aufgepresst bzw. aufgeschoben wird bzw. die den Bauteilen zugewiesene Durchmesservergrößerung 7 in die Durchführungsöffnungen 6 der Bauteile 5 eingepresst wird, wird durch Verdrehen der Tragwelle 4 die gewünschte Winkelposition des Bauteils 5 relativ zur Tragwelle 4 eingestellt. Dies wird in Fig. 3c durch den Pfeil 10 angedeutet. Der Pfeil 11 zeigt die anschließende Aufpressrichtung für das Bauteil 5. In analoger Weise erfolgt das Aufpressen für die weiteren Bauteile 5. Auch hier wird wieder auf sehr einfache Weise die gewünschte Winkelposition des Bauteils 5 relativ zur Tragwelle 4 durch einfaches Verdrehen der Tragwelle 4 eingestellt, bevor das jeweilige Bauteil 5 auf die Durchmesservergrößerung 7 aufgeschoben wird.

In Fig. 3d ist ein auf die Durchmesservergrößerung 7 der Tragwelle 4 aufgeschobenes bzw. aufgepresstes Bauteil 5 gezeigt.

In Fig. 3e sind schematisch zwei Bauteile 5 dargestellt, die in der jeweils vorbestimmten, zueinander unterschiedlichen Winkellage auf der Tragwelle 4 fixiert sind. Aus Gründen der Übersichtlichkeit, sind die Durchmesseraufweitungen an den Fügepositionen der Bauteile 5 in Fig. 3e nicht dargestellt.

Bei einer Weiterbildung des erfindungsgemäßen Verfahrens wird eine zumindest teilweise im Fügebereich 20 angeordnete Struktur 9 ausgebildet (Fig. 4). Diese Struktur 9 trägt nach der Ausbildung der Durchmesservergrößerung 7 zur Überdeckung zwischen Durchmesservergrößerung 7 und Durchgangsöffnung 6 der Bauteile 5 bei bzw. bildet diese Überdeckung aus.

Die Struktur kann durch plastische und materialverdrängende Verfahren hergestellt werden, wie beispielsweise Kneten, Rollieren oder Rändeln. Im dargestellten Ausführungsbeispiel wurde die Struktur 9 durch Rollieren erzeugt.

Es ist jedoch auch möglich, dass die Struktur mittels eines materialabtrennenden Verfahrens mit geometrisch bestimmter oder geometrisch unbestimmter Schneide ausgebildet wird. Als Verfahren mit geometrisch bestimmter Schneide ist beispielsweise das Drehen und als Verfahren mit geometrisch unbestimmter Schneide beispielsweise das Schleifen bevorzugt.

Ferner sind jedoch auch materialabtragende Verfahren, wie beispielsweise Erosion, Laser- oder Elektronenstrahlbearbeitung, möglich.

Da die Tragwelle 4 mit der Lageraufnahme 2 ein Gleitlager ausbilden soll, ist es erforderlich, dass die Tragwelle 4 bzw. der an bzw. mit der Struktur 9 erzeugte Durchmesser der Tragwelle 4 so dimensioniert ist, dass die Tragwelle 4 bzw. die Struktur 9 durch die Lageraufnahmen 2 der Stützstruktur 3 und die Durchgangsöffnung 6 der Bauteile 5 geschoben werden kann. Der Außendurchmesser der Tragwelle 4 im Bereich der Struktur 9 wird somit durch den Durchmesser der Lageraufnahme 2 beeinflusst bzw. vorgegeben. Um die erforderlichen Durchmesserverhältnisse zu erhalten, kann die Struktur 9 vor dem Einschieben der Tragwelle 4 in die Lageraufnahme 2 bearbeitet und der entsprechende Durchmesser eingestellt werden. Eine solche nachträgliche Bearbeitung kann beispielsweise durch Schleifen oder Drehen erfolgen.

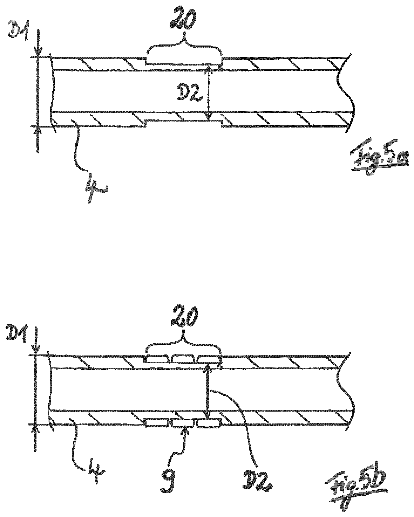

Es ist jedoch auch denkbar, dass der Durchmesser der Tragwelle 4 in dem Bereich, in dem die Struktur 9 ausgebildet wird, einen Durchmesser D2 aufweist, der kleiner ist, als der Durchmesser D1 der Tragwelle 4 im Bereich des Gleitlagers, wie in Fig. 5a gezeigt. Die in dem Bereich mit dem Durchmesser D2 ausgebildete Struktur 9, kann so mit einem größeren Anteil zum gesamten Durchmesser D1 der Tragwelle 4 beitragen, ohne dass der Durchmesser D1 geändert wird. Nach der Aufweitung der Tragwelle 4, kann eine solche Struktur einen größeren Formschluss zum Bauteil 5 und damit ein höheres übertragbares Drehmoment ermöglichen, da das Bauteil 5 beim Aufschieben auf die Struktur 9 bzw. auf die Durchmesservergrößerung 7 besser und mehr Material verdrängen kann. Insbesondere können hier zur Ausbildung der Struktur 9 auch materialaufbringende Verfahren, wie beispielsweise das Schweißen bzw. das Aufbringen von Lot, genutzt werden. Jedoch muss auch bei dieser Ausgestaltung die Tragwelle 4 durch die Lageraufnahmen 2 und die Durchgangsöffnungen 6 geschoben werden können. Um dies zu erreichen kann auch bei dieser Ausgestaltung die Struktur 9 nachträglich bearbeitet werden. So zeigt Fig. 5b eine Tragwelle 4, bei der der Bereich 20 nach dem Ausbilden der Struktur 9 auf den Durchmesser D1 geschliffen wurde.

Vorteilhafterweise ist die Durchgangsöffnung 6 der Bauteile 5 mit den Durchmesser der Durchgangsöffnung 6 verringernden Vorsprüngen, wie beispielsweise Zähnen, versehen (in den Figuren nicht dargestellt). Vorteilhafterweise sind diese Vorsprünge gleichmäßig über den Umfang der Durchgangsöffnung 6 verteilt und weisen zudem eine größere Härte als die Tragwelle 4 oder die Struktur 9 auf. Die Zähne der Bauteile 5 können sich dann in die Durchmesservergrößerung 7 bzw. die Struktur 9 eingraben und eine Kombination aus Kraft- und Formschluss erzeugen. Durch den Kraft- und Formschluss erhöht sich das durch die Bauteile 5 übertragbare Drehmoment.

Des Weiteren hat es sich als Vorteilhaft erwiesen, die Tragwelle 4 zumindest in einem Teilbereich der Fügeposition 20 mit einer das Reibmoment erhöhenden Beschichtung, wie beispielsweise Zink, zu beschichten.

## Patentansprüche

1. Verfahren zum Zusammenbau eines Moduls (1) für einen Kraftfahrzeugmotor, welches mindestens eine Stützstruktur (3) mit Lageraufnahmen (2) und mindestens eine in den Lageraufnahmen (2) drehbar gelagerte Nockenwelle umfasst, wobei die Nockenwelle im Zuge des Zusammenbaus des Moduls (1) aus einer zumindest abschnittsweise als Hohlwelle ausgebildeten Tragwelle (4) und mit der Tragwelle (4) an vorbestimmten Fügepositionen (20) zu verbindenden Bauteilen (5) gebaut wird, wobei der Hohlraum der Tragwelle (4) sich zumindest teilweise unter die Fügepositionen (20) erstreckt, und wobei die Bauteile (5) zur Aufnahme der Tragwelle (4) Durchgangsöffnungen (6) aufweisen, umfassend die Verfahrensschritte:
a) Bereitstellen der Stützstruktur (3) mit den Lageraufnahmen (2),
b) Positionieren der auf der Tragwelle (4) zu befestigenden Bauteile (5) in einer vorbestimmten Reihenfolge derart, dass die Bauteile (5) mit ihren Durchgangsöffnungen (6) fluchtend zu den Lageraufnahmen (2) der Stützstruktur (3) angeordnet,
c) Durchschieben der Tragwelle (4) durch die Lageraufnahmen (2) der Stützstruktur (3) und die Durchgangsöffnungen (6) der Bauteile (5), **gekennzeichnet dadurch, dass**
- die Bauteile (5) im Verfahrensschritt b) jeweils auf einer Vorposition angeordnet werden, die nicht der Fügeposition (20) entspricht, die die Bauteile (5) auf der fertig gebauten Nockenwelle einnehmen, und
d) nach dem Durchschieben der Tragwelle (4) durch die Lageraufnahmen (2) und die Durchgangsöffnungen (6) zumindest bei einem Teilbereich der Fügeposition (20) der Durchmesser der Tragwelle (4) mittels eines Innendruckumformverfahrens derart vergrößert wird, dass zumindest in einem Teilbereich der Fügeposition (20) der Außendurchmesser der Tragwelle (4) und der Innendurchmesser der Durchgangsöffnung (6) des zugeordneten Bauteiles (5) eine vorbestimmbare Überdeckung aufweisen,
e) die Bauteile (5) durch axiales Verschieben der Bauteile (5) entlang der Tragwelle (4) und/oder axiales Verschieben der Tragwelle (4) relativ zu den Bauteilen (5) zu ihren jeweiligen Fügepositionen (20) auf der Tragwelle (4) gelangen, wobei die jeweils erforderliche Winkelposition jedes Bauteils (5) relativ zur Tragwelle (4) vor dem Verschieben der Bauteile (5) und/oder dem Verschieben der Tragwelle (4) eingestellt wird.

2. Verfahren nach Anspruch 1, **dadurch gekennzeichnet, dass** die eingestellte Winkelposition jedes Bauteils (5) relativ zur Tragwelle (4) durch Verdrehen der Tragwelle (4) um einen bestimmten Winkel eingestellt wird.

3. Verfahren nach einem der Ansprüche 1 oder 2, **dadurch gekennzeichnet, dass** der für das Innendruckumformverfahren notwendige Druck im Hohlraum (10) der Tragwelle (4) mittels eines druckbeaufschlagten Fluids erzeugt wird.

4. Verfahren nach einem der Ansprüche 1 oder 2, **dadurch gekennzeichnet, dass** bei dem Innendruckumformverfahren der Druck in dem Hohlraum (10) der Tragwelle (4) mittels Aufspreizen eines im Hohlraum (10) der Tragwelle (4) angeordneten Druckelementes erzeugt wird.

5. Verfahren nach einem der Ansprüche 1 bis 4, **dadurch gekennzeichnet, dass** vor dem Durchschieben der Tragwelle (4) durch die Lageraufnahmen (2) der Stützstruktur (3) und die Durchgangsöffnungen (6) der Bauteile (5), auf der Mantelfläche der Tragwelle (4) wenigstens eine Struktur (9) ausgebildet wird, die sich zumindest teilweise in den Bereich der Fügepositionen (20) der Bauteile (5) erstreckt.

6. Verfahren nach Anspruche 5, **dadurch gekennzeichnet, dass** die auf der der Mantelfläche der Tragwelle (4) ausgebildete Struktur (9) mittels plastischer Umformung der Mantelfläche der Tragwelle (4) erzeugt wird.

7. Verfahren nach Anspruch 6, **dadurch gekennzeichnet, dass** die plastische Umformung ein materialverdrängendes Verfahren, wie beispielsweise Rollieren, ist.

8. Verfahren nach Anspruch 5, **dadurch gekennzeichnet, dass** die auf der der Mantelfläche der Tragwelle (4) ausgebildete Struktur (9) mittels eines materialabtrennenden Verfahrens mit geometrisch bestimmter und/oder geometrisch unbestimmter Schneide erzeugt wird.

9. Verfahren nach Anspruch 8, **dadurch gekennzeichnet, dass** die Struktur (9) mittels eines materialabtrennenden Verfahrens mit geometrisch unbestimmter Schneide erzeugt wird, wobei das Verfahren Schleifen ist.

10. Verfahren nach Anspruch 8, **dadurch gekennzeichnet, dass** die Struktur (9) mittels eines materialabtrennenden Verfahrens mit geometrisch bestimmter Schneide erzeugt wird, wobei das Verfahren Drehen ist.

11. Verfahren nach Anspruch 5, **dadurch gekennzeichnet, dass** die Struktur (9) mittels eines materialabtragenden Verfahrens, wie beispielsweise Erosion, Laser- oder Elektronenstrahlbearbeitung, erzeugt wird.

12. Verfahren nach Anspruch 5, **dadurch gekennzeichnet, dass** die Struktur (9) mittels eines materialauftragenden Verfahrens, wie beispielsweise Schweißen oder Löten, erzeugt wird.

13. Verfahren nach einem der Ansprüche 5 bis 12, **dadurch gekennzeichnet, dass** die Struktur (9) vor dem Durchschieben der Tragwelle (4) durch die Lageraufnahmen (2) bearbeitet, insbesondere geschliffen wird.

14. Verfahren nach einem der Ansprüche 1 bis 13, **dadurch gekennzeichnet, dass** wenigstens die Stützstruktur (3) und/oder einige der Bauteile (5) bei und/oder vor dem Durchschieben der Tragwelle (4) durch die Lageraufnahmen (2) der Stützstruktur (3) und die Durchgangsöffnungen (6) der Bauteile (5) erwärmt wird bzw. werden.

15. Verfahren nach einem der Ansprüche 1 bis 14, **dadurch gekennzeichnet, dass** wenigstens ein Teilbereich der Fügeposition 20 der Tragwelle (4) mit einer das Reibmoment erhöhenden Beschichtung beschichtet ist.

## Claims

1. Method for assembling a module (1) for a motor vehicle engine, which module (1) comprises at least one supporting structure (3) with bearing seats (2) and at least one camshaft which is mounted rotatably in the bearing seats (2), the camshaft being constructed during the assembly of the module (1) from a support shaft (4) which is configured at least in sections as a hollow shaft and components (5) which are to be connected to the support shaft (4) at predefined joining positions (20), the cavity of the support shaft (4) extending at least partially under the joining positions (20), and the components (5) having through openings (6) for receiving the support shaft (4), comprising the method steps:
a) provision of the supporting structure (3) with the bearing seats (2),
b) positioning of the components (5) to be fastened on the support shaft (4) in a predefined sequence in such a way that the components (5) are arranged with their through openings (6) aligned with respect to the bearing seats (2) of the supporting structure (3),
c) pushing of the support shaft (4) through the bearing seats (2) of the supporting structure (3) and the through openings (6) of the components (5), **characterized in that**
- the components (5) are arranged in method step b) in each case at a preliminary position which does not correspond to the joining position (20) which the components (5) assume on the finally constructed camshaft, and,
d) after the support shaft (4) is pushed through the bearing seats (2) and the through openings (6), the diameter of the support shaft (4) is enlarged at least in a part region of the joining position (20) by means of an internal pressure reshaping method in such a way that, at least in a part region of the joining position (20), the external diameter of the support shaft (4) and the internal diameter of the through opening (6) of the associated component (5) have a predefinable overlap,
e) the components (5) arrive at their respective joining positions (20) on the support shaft (4) by way of axial displacement of the components (5) along the support shaft (4) and/or axial displacement of the support shaft (4) relative to the components (5), the respectively required angular position of each component (5) relative to the support shaft (4) being set before the displacement of the components (5) and/or the displacement of the support shaft (4).

2. Method according to Claim 1, **characterized in that** the set angular position of each component (5) relative to the support shaft (4) is set by way of rotation of the support shaft (4) by a defined angle.

3. Method according to either of Claims 1 and 2, **characterized in that** the pressure which is necessary for the internal pressure reshaping method is generated in the cavity (10) of the support shaft (4) by means of a pressurized fluid.

4. Method according to either of Claims 1 and 2, **characterized in that,** during the internal pressure reshaping method, the pressure in the cavity (10) of the support shaft (4) is generated by means of a pressure element which is arranged in the cavity (10) of the support shaft (4) being spread open.

5. Method according to one of Claims 1 to 4, **characterized in that,** before the support shaft (4) is pushed through the bearing seats (2) of the supporting structure (3) and the through openings (6) of the components (5), at least one structure (9) which extends at least partially into the region of the joining positions (20) of the components (5) is configured on the circumferential face of the support shaft (4).

6. Method according to Claim 5, **characterized in that** the structure (9) which is configured on the circumferential face of the support shaft (4) is produced by means of plastic reshaping of the circumferential face of the support shaft (4).

7. Method according to Claim 6, **characterized in that** the plastic reshaping is a material-displacing process, such as roll-forming.

8. Method according to Claim 5, **characterized in that** the structure (9) which is configured on the circumferential face of the support shaft (4) is produced by means of a material-removing process with a geometrically defined and/or geometrically undefined cutting edge.

9. Method according to Claim 8, **characterized in that** the structure (9) is produced by means of a material-removing process with a geometrically undefined cutting edge, the method being grinding.

10. Method according to Claim 8, **characterized in that** the structure (9) is produced by means of a material-removing process with a geometrically defined cutting edge, the method being turning.

11. Method according to Claim 5, **characterized in that** the structure (9) is produced by means of a material-removing process, such as erosion, laser or electron beam machining.

12. Method according to Claim 5, **characterized in that** the structure (9) is produced by means of a material-adding process, such as welding or brazing.

13. Method according to one of Claims 5 to 12, **characterized in that** the structure (9) is machined, in particular ground, before the support shaft (4) is pushed through the bearing seats (2).

14. Method according to one of Claims 1 to 13, **characterized in that** at least the supporting structure (3) and/or some of the components (5) are/is heated while and/or before the support shaft (4) is pushed through the bearing seats (2) of the supporting structure (3) and the through openings (6) of the components (5).

15. Method according to one of Claims 1 to 14, **characterized in that** at least one part region of the joining position 20 of the support shaft (4) is coated with a coating which increases the frictional moment.

## Revendications

1. Procédé d'assemblage d'un module (1) pour un moteur de véhicule automobile, qui comprend au moins une structure de support (3) avec des logements de palier (2) et au moins un arbre à cames supporté à rotation dans les logements de palier (2), l'arbre à cames au cours de l'assemblage du module (1) étant construit à partir d'un arbre de support (4) réalisé au moins en partie sous forme d'arbre creux et de composants (5) devant être raccordés à l'arbre de support (4) dans des positions d'assemblage prédéterminées (20), la cavité de l'arbre de support (4) s'étendant au moins en partie sous les position d'assemblage (20) et les composants (5) pour recevoir l'arbre de support (4) présentant des ouvertures de passage (6), comprenant les étapes de procédé suivantes :
a) fourniture de la structure de support (3) avec les logements de palier (2),
b) positionnement des composants (5) devant être fixés à l'arbre de support (4) dans une succession prédéterminée, de telle sorte que les composants (5) soient disposés avec leurs ouvertures de passage (6) en affleurement avec les logements de palier (2) de la structure de support (3),
c) enfilement de l'arbre de support (4) à travers les logements de palier (2) de la structure de support (3) et les ouvertures de passage (6) des composants (5),
**caractérisé en ce que**
- les composants (5) dans l'étape de procédé b) sont à chaque fois disposés dans une position initiale qui ne correspond pas à la position d'assemblage (20) que les composants (5) adoptent sur l'arbre à cames assemblé, et
d) après enfilement de l'arbre de support (4) à travers les logements de palier (2) et les ouvertures de passage (6), au moins dans une région partielle de la position d'assemblage (20), le diamètre de l'arbre de support (4) est augmenté au moyen d'un procédé de façonnage à pression intérieure de telle sorte qu'au moins dans une région partielle de la position d'assemblage (20), le diamètre extérieur de l'arbre de support (4) et le diamètre intérieur de l'ouverture de passage (6) du composant associé (5) présentent un recouvrement prédéterminable,
e) les composants (5), par déplacement axial des composants (5) le long de l'arbre de support (4) et/ou déplacement axial de l'arbre de support (4) par rapport aux composants (5), parviennent dans leurs positions d'assemblage respectives (20) sur l'arbre de support (4), la position angulaire respectivement nécessaire pour chaque composant (5) par rapport à l'arbre de support (4) étant ajustée avant le déplacement des composants (5) et/ou le déplacement de l'arbre de support (4).

2. Procédé selon la revendication 1, **caractérisé en ce que** la position angulaire ajustée de chaque composant (5) par rapport à l'arbre de support (4) est ajustée par rotation de l'arbre de support (4) autour d'un angle déterminé.

3. Procédé selon l'une quelconque des revendications 1 ou 2, **caractérisé en ce que** la pression nécessaire pour le procédé de façonnage à pression intérieure dans la cavité (10) de l'arbre de support (4) est produite au moyen d'un fluide sous pression.

4. Procédé selon l'une quelconque des revendications 1 ou 2, **caractérisé en ce que** dans le cas du procédé de façonnage à pression intérieure, la pression dans la cavité (10) de l'arbre de support (4) est produite au moyen d'un écartement d'un élément de pression disposé dans la cavité (10) de l'arbre de support (4).

5. Procédé selon l'une quelconque des revendications 1 à 4, **caractérisé en ce qu'**avant l'enfilement de l'arbre de support (4) à travers les logements de palier (2) de la structure de support (3) et les ouvertures de passage (6) des composants (5), au moins une structure (9) est réalisée sur la surface d'enveloppe de l'arbre de support (4), laquelle s'étend au moins en partie dans la région des positions d'assemblage (20) des composants (5).

6. Procédé selon la revendication 5, **caractérisé en ce que** la structure (9) réalisée sur la surface d'enveloppe de l'arbre de support (4) est produite au moyen d'une déformation plastique de la surface d'enveloppe de l'arbre de support (4).

7. Procédé selon la revendication 6, **caractérisé en ce que** la déformation plastique est un procédé repoussant le matériau, comme par exemple le galetage.

8. Procédé selon la revendication 5, **caractérisé en ce que** la structure (9) réalisée sur la surface d'enveloppe de l'arbre de support (4) est produite au moyen d'un procédé d'enlèvement de matière, avec une arête de coupe de géométrie déterminée et/ou non déterminée.

9. Procédé selon la revendication 8, **caractérisé en ce que** la structure (9) est produite au moyen d'un procédé d'enlèvement de matière avec une arête de coupe de géométrie non déterminée, le procédé étant un meulage.

10. Procédé selon la revendication 8, **caractérisé en ce que** la structure (9) est produite au moyen d'un procédé d'enlèvement de matière avec une arête de coupe de géométrie déterminée, le procédé étant un tournage.

11. Procédé selon la revendication 5, **caractérisé en ce que** la structure (9) est produite au moyen d'un procédé d'enlèvement de matière, comme par exemple un usinage par érosion, à faisceau laser ou à faisceau d'électrons.

12. Procédé selon la revendication 5, **caractérisé en ce que** la structure (9) est produite au moyen d'un procédé d'application de matière, comme par exemple un soudage ou un brasage.

13. Procédé selon l'une quelconque des revendications 5 à 12, **caractérisé en ce que** la structure (9) est usinée par enfilement de l'arbre de support (4) à travers les logements de palier (2), en particulier est meulée.

14. Procédé selon l'une quelconque des revendications 1 à 13, **caractérisé en ce qu'**au moins la structure de support (3) et/ou certains des composants (5) est/sont chauffés pendant et/ou avant l'enfilement de l'arbre de support (4) à travers les logements de palier (2) de la structure de support (3) et les ouvertures de passage (6) des composants (5).

15. Procédé selon l'une quelconque des revendications 1 à 14, **caractérisé en ce qu'**au moins une région partielle de la position d'assemblage (20) de l'arbre de support (4) est revêtue d'un revêtement augmentant le couple de friction.
